# FASCICULE DE BREVET EUROPEEN

(11) **EP 0 703 717 B1**
(45) Date de publication et mention de la délivrance du brevet: **11.12.2002**
(21) Numéro de dépôt: 95402109.3
(22) Date de dépôt: 19.09.1995
(51) Int. Cl.: H04Q 7/32, H04B 1/16, G06F 1/32

(54) **Economie d'énergie dans un système incluant un radiotéléphone portatif connecté à un dispositif périphérique**
Batteriesparanordnung eines Systemes mit einem an ein Peripheriegerät angeschlossenen Funktelefon
Battery saving for a system comprising a mobile telephone connected to an accessory device

(30) Priorité: 23.09.1994 FR 9411399
(43) Date de publication de la demande: 27.03.1996
(73) Titulaire: ALCATEL, 75008 Paris (FR)
(72) Inventeur: Guerlin, Jean-Pierre, F-95130 (FR); Sarremejean, Xavier, F-95490 Vaureal (FR); Chateau, Alain, F-75020 Paris (FR); Bourrier, Pascal, F-75011 Paris (FR); De Savigny, Marc, F-92400 Courbevoie (FR)
(74) Mandataire: Korakis-Ménager, Sophie

(56) Documents cités:
- EP-A- 0 582 391
- WO-A-94/17502
- MEINKE; GRUNDLACH: "Taschenbuch der Hochfrequenztechnik", 1992, SPRINGER VERLAG, BERLIN/HEIDELBERG

## Description

La présente invention concerne un procédé d'économie d'énergie dans un système incluant deux dispositifs interconnectés à travers une liaison d'échange de données. Les deux dispositifs ont une faible autonomie et sont à titre d'exemple un radiotéléphone portatif et un micro-ordinateur portatif. L'invention concerne également un tel radiotéléphone portatif.

La portabilité des dispositifs électroniques informatiques et de télécommunications a nécessité des efforts considérables en termes d'économie d'énergie. De tels dispositifs sont munis de batteries à capacité réduite et toutes les techniques d'économie d'énergie doivent être mises en oeuvre pour augmenter leur autonomie.

Le document WO-A-94 17502 décrit un procédé et un appareillage permettant d'établir des communications de données entre des dispositifs économisant l'énergie qui disposent de deux modes de fonctionnement impliquant l'usage de moyens permettant à un dispositif en mode de plein fonctionnement de faire passer l'autre dispositif en mode de plein fonctionnement, lorsque ce dernier est en mode de fonctionnement réduit.

Le document EP-A-0582391 décrit quant à lui, un générateur d'horloge associé à un circuit de dérivation d'interruption qui permet de réduire la consommation en énergie du système où ils sont implantés.

D'une manière générale, les techniques d'économie d'énergie consistent notamment à mettre un dispositif totalement ou partiellement en veille durant des périodes d'inactivité totale ou partielle de ce dispositif. Cette mise en veille se traduit, par exemple dans le cas d'un radiotéléphone portatif, par une désactivation sélective des circuits respectifs d'alimentation des moyens d'émission et réception et des organes externes (écran, ... ), ainsi que des circuits d'horloge cadençant des circuits numériques tels qu'interface d'entrée/sortie, unité centrale, typiquement microprocesseur, et circuit de traitement en bande de base. En contrepartie de la désactivation de certains circuits d'horloge et d'alimentation, sont activés des temporisateurs qui ont pour fonction de réactiver après un délai prédéterminé ces circuits d'horloge et d'alimentation afin de réveiller les circuits numériques qu'ils cadençant, ou activer les circuits analogiques qu'ils alimentent. Par exemple, dans le cas d'une mise en veille totale du radiotéléphone, sont activés des temporisateurs qui réactivent à échéance prédéterminée certains circuits nécessaires à l'écoute de messages d'appel recus par voie radio.

Pris individuellement, chacun de ces dispositifs électroniques informatiques ou de télécommunications radiotéléphone, micro-ordinateur, etc..., présente des caractéristiques d'autonomie remarquables résultant d'une gestion optimale de mise en veille du dispositif qui assure sa désactivation dès qu'il n'est pas utile de maintenir une activité. Par contre, lorsqu'est établie une liaison d'échange de données, par exemple entre un radiotéléphone portatif et un micro-ordinateur portatif, il apparaît que la fonction d'économie d'énergie dans chacun de ces dispositifs n'est pas pleinement optimisée. Les termes de "liaison d'échange de données" doivent être interprétés comme associés à une signification plus vaste qu'un simple lien matériel de transport de données, et intègrent la notion de couches logicielles communicantes dans les deux dispositifs interconnectés.

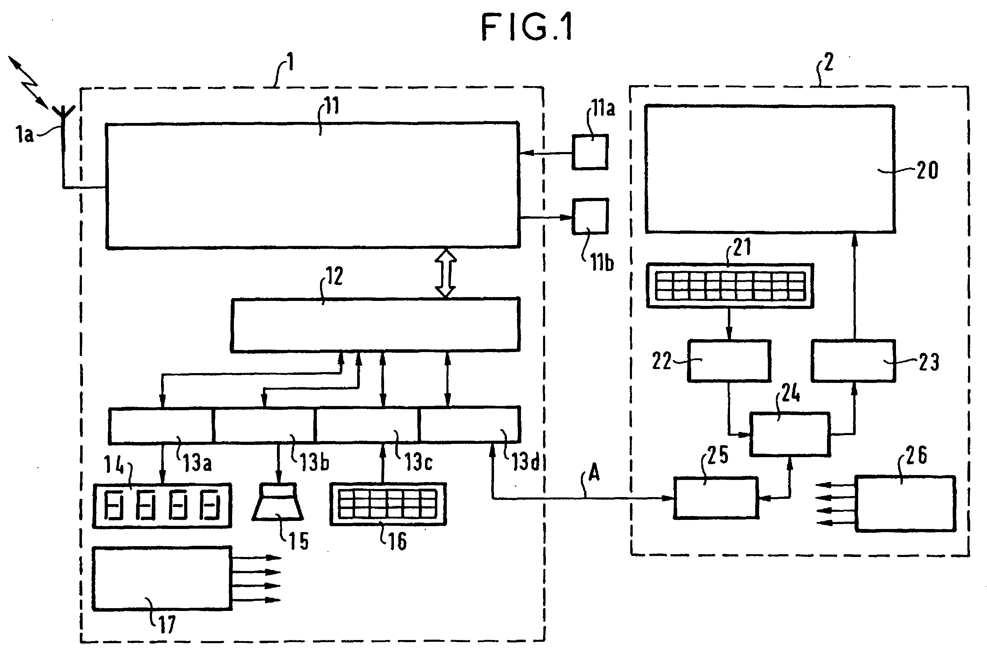

En référence à la figure 1, sont représentés un radiotéléphone portatif 1 et un micro-ordinateur portatif 2 connectés à travers une liaison d'échange de données dont le support physique de ladite liaison est matérialisé par le repère A. Typiquement le radiotéléphone 1 comprend une unité d'émission et de réception radioélectrique 11 , sous la forme de circuit de modulation, circuit de traitement en bande de base et synthétiseur, une unité de contrôle 12, des circuits d'interface d'entrée-sortie 13a, 13b, 13c et 13d, chacun associé à un organe externe respectif, tel qu'afficheur 14, ronfleur 15 et clavier 16. Une batterie 17 fournit l'alimentation des circuits précités. Des signaux radioélectriques sont reçus et transmis par l'unité 11 à travers une antenne 1a. Cette unité 11 est connectée à un microphone 11a et un écouteur 11b. L'unité de contrôle 12 assure, à travers un bus, la commande de l'unité d'émission et de réception 11. En outre, l'unité de contrôle 12 est reliée à chacun des circuits d'interface d'entrée-sortie 13a à 13d.

Le micro-ordinateur portable 2 comprend pour sa part un écran 20 et un clavier 21, tous deux connectés à une unité de contrôle 24 respectivement à travers deux circuits d'interface 22 et 23, ainsi qu'un circuit d'interface 25 également relié à l'unité de contrôle 24. Le micro-ordinateur 2 comprend, en outre, une batterie 26 destinée à alimenter chacun des circuits le constituant.

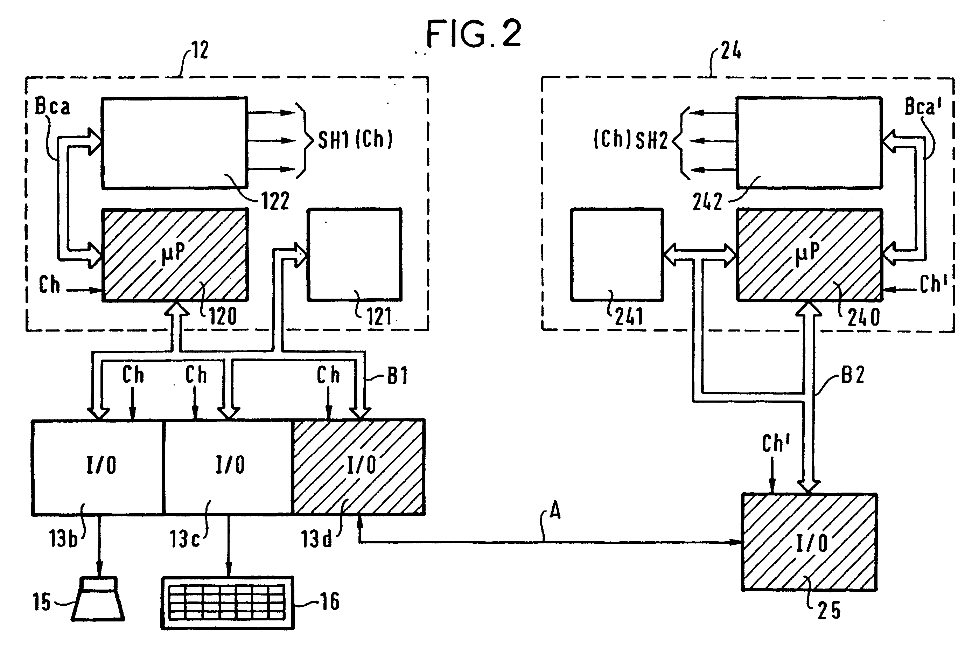

En référence à la figure 2, sont représentés avec plus de détails les unités de contrôle 12 et 24 respectivement dans le radiotéléphone portatif 1 et le micro-ordinateur portatif 2. Chacune de ces unités de contrôle 12, 24 comprend un microprocesseur, ou microcontrôleur, 120, 240, une mémoire associée 121, 241, et un contrôleur d'activité 122, 242. Le microprocesseur 120, 240 est relié au contrôleur d'activité 122, 242 à travers un bus de contrôle d'activité Bca, Bca', et à sa mémoire associée 121, 241 à travers un bus B1, B2. Ce bus B1, B2 connecte également le microprocesseur 120, 240 aux circuits d'interface 13a-13d, 25. La liaison d'échange de données entre le radiotéléphone 1 et le micro-ordinateur 2 est réalisée grâce à l'ensemble des circuits suivants : le microprocesseur 120, le circuit d'interface 13d, un support physique A, le circuit d'interface 25, et le microprocesseur 240. Deux extrémités du support physique A sont appliquées à deux premières entrées/sorties respectives des deux circuits d'interface 13d et 25, et les deux circuits d'interface 13d et 25 ont respectivement deux secondes entrées/sorties connectées au microprocesseur 120 à travers le bus B1 et au microprocesseur 240 à travers le bus B2.

Un exemple de mode de fonctionnement selon la technique antérieure des radiotéléphone portatif 1 et micro-ordinateur portatif 2 interconnectés à travers cette liaison d'échange de données matérialisée par le support physique A, est tel que suit. Initialement, à la mise sous tension du radiotéléphone 1, tous les circuits qu'il inclut sont alimentés et activés pour une durée au moins égale au temps nécessaire à l'inscription du radiotéléphone dans la cellule auquel il appartient. Puis, en vue de garantir une économie d'énergie maximale dans le radiotéléphone 1, le microprocesseur 120 prend l'initiative de couper l'alimentation électrique des circuits de type analogique, tels que circuits radio dans l'unité 11, et désactiver les horloges de cadencement des circuits de type numérique, tels que circuit de traitement en bande de base, ou unité de contrôle 12. A cette fin, l'unité de contrôle 12 comprend le contrôleur d'activité 122 qui est commandé par le microprocesseur 120. Le microprocesseur 120 transmet un message dans le bus de commande d'activité Bca appliqué à une entrée du contrôleur 122. Le contrôleur, sur réception du message, et en fonction de ce message, met en veille totalement ou partiellement le radiotéléphone 1. Pour cela, notamment, il désactive certains ou tous les circuits d'horloge produisant les signaux d'horloge SH1 cadençant les circuits numériques et déclenche des temporisateurs ayant pour fonction de réactiver aprés un délai prédéterminé lesdits circuits d'horloge qui sont désactivés. En résultat d'une mise en veille totale du radiotéléphone 1, seul le circuit 122 est actif. Dans ce cas, selon une réalisation connue, à un instant prédéterminé de réception de message d'appel radio qui correspond à l'expiration d'une temporisation, le circuit 122 produit un signal qui active des circuits d'horloge et d'alimentation destinés notamment à alimenter les circuits radio et cadencer les circuits numériques dans les unités 11 et 12, nécessaires à une réception d'un message d'appel radio. Si un tel message d'appel concerne le radiotéléphone 1, d'autres circuits sont alors activés par le microprocesseur à travers le contrôleur d'activité, tels qu'écran 14 et ronfleur 15. Tous ces circuits, activés sont remis en veille par le microprocesseur 120 à travers le contrôleur 122 dès que possible, à la fin de la communication si le message d'appel est destiné au radiotéléphone 1, ou immédiatement après la réception du message d'appel si ce dernier n'est pas destiné au radiotéléphone.

Dans le micro-ordinateur 2, le circuit de contrôle, au moyen des circuits 240 à 242 peut également offrir une gestion de ses circuits avec économie d'énergie en prévoyant une désactivation de l'alimentation de l'écran, du microprocesseur 240, etc... Il est utilisé pour cela le contrôleur d'activité 242 qui désactive sélectivement des circuits d'horloge produisant des signaux d'horloge SH2 cadençant les circuits numériques.

Dans le cas où une liaison d'échange de données entre le radiotéléphone 1 et le micro-ordinateur 2 est réalisée à travers les deux circuits d'interface 13d et 25 respectivement dans le radiotéléphone 1 et le micro-ordinateur 2, certains circuits ne peuvent alors plus offrir, selon la technique antérieure, une contribution quelconque à une économie d'énergie dans le système formé des radiotéléphone 1 et micro-ordinateur 2. Typiquement, la connexion simplement matérielle par câblage entre le micro-ordinateur 2 et le radiotéléphone 1, réalisé à travers le support A, précède une phase d'établissement d'une liaison d'échange de données. Pour cet établissement de liaison, des messages sont échangés entre micro-ordinateur 2 et radiotéléphone 1 et ont pour fonction d'établir un lien de données entre eux. Une liaison de données est alors établie qui permet au radiotéléphone 1 de transmettre des données vers le micro-ordinateur 2, et au micro-ordinateur 2 de transmettre des données vers le radiotéléphone 1. Ces données sont par exemple transmises vers ou reçues en provenance du réseau mobile par le radiotéléphone 1. La liaison de données qui est établie entre le radiotéléphone 1 et le micro-ordinateur 2 satisfait par exemple aux Recommandations d'Interconnexion des Systèmes Ouverts (OSI) de l'ISO. Un protocole commun est donc géré par les deux microprocesseurs 120 et 240 respectivement dans les unités de contrôle 12 et 24 pour cette liaison de données entre radiotéléphone 1 et micro-ordinateur 2. Un tel protocole selon la technique antérieure prévoit des phases d'établissement d'une liaison de données, de maintien et de rupture d'une telle liaison, sans résoudre le problème de la dépense d'énergie qui résulte de l'existence d'une telle liaison. Il apparaît, en effet, comme représenté en zone hachurée dans la figure 2, que des circuits utiles à l'existence d'une telle liaison, et notamment les deux microprocesseurs 120 et 240, et les deux interfaces 13d et 25, respectivement dans les radiotéléphone 1 et micro-ordinateur 2 ne sont pas mis en veille, ou désactivés. Cela provient du fait qu'une liaison de données permet uniquement un échange de données de nature logique, typiquement message, (trame, paquet,...) entre le micro-ordinateur 2 et le radiotéléphone 1. Or une information logique ne permet pas une activation à distance des circuit d'interface 13d, 25 et microprocesseur 120, 240 d'un dispositif par un autre, et cela précisément dans l'hypothèse où les circuits du dispositif distant 13d, 25 et 120, 240 sont en veille. La couche PHYSIQUE de la liaison de données est transparente à toute information transmise. Elle ne permet donc pas d'activer des circuits impliqués dans une liaison de données en fonction d'une information reçue. Dans une application considérant un radiotéléphone connecté à un micro-ordinateur, il est nécessaire que chacun de ces dispositifs puisse réveiller à distance des circuits qui appartiennent à l'autre dispositif et qui sont impliqués dans la liaison de données, à défaut de quoi ces circuits ne peuvent être mis en veille. En effet, il est par exemple nécessaire que le radiotéléphone puisse réveiller le micro-ordinateur pour lui retransmettre des données reçues.

L'invention vise à remédier à l'inconvénient précité en prévoyant la mise en veille notamment des microprocesseurs et des circuits d'interface d'entrée-sortie dans les radiotéléphone et micro-ordinateur.

Elle propose donc un procédé d'économie d'énergie pour système incluant un premier et un second dispositifs s'interconnectant à travers une liaison d'échange de données qui dispose d'un support physique et qui est établie entre des premiers et des seconds moyens d'interface respectivement contenus les uns dans le premier dispositif et les autres dans le second, et cadencés respectivement par un premier et un second circuit d'horloge.

Selon une caractéristique de l'invention, ce procédé prévoit les étapes suivantes :
- mise en veille, par voie de message à travers la liaison d'échange établie, des moyens d'interface d'un premier des dispositifs par les moyens d'interface du second des dispositifs, ladite mise en veille étant réalisée par une désactivation du circuit d'horloge des moyens d'interface mis en veille ;
- réveil des moyens d'interface du premier des dispositifs par les moyens d'interface du second, par voie électrique à travers le support physique de la liaison d'échange de données, ledit réveil étant obtenu par un changement d'état dans ledit support physique respectivement généré et détecté par des circuits compris dans les moyens d'interface du second et du premier dispositif.

Selon une forme de mise en oeuvre du procédé selon l'invention, la mise en veille d'un dispositif est occasionnée par la transmission d'un message de mise en veille par les moyens d'interface d'un dispositif aux moyens d'interface de l'autre dispositif, à travers le support physique de la liaison d'échange.

Une autre de mise en oeuvre du procédé selon l'invention est prévue pour un système où l'un des dispositifs émet successivement des messages dits de scrutation, par ses moyens d'interface sur la liaison d'échange de données, vers les moyens d'interface de l'autre dispositif, pour inviter cet autre à lui renvoyer en retour, un message, dit de demande d'émission de données. Il est alors prévu, selon l'invention, que le dispositif qui émet les messages de scrutation déclenche la mise en veille du dispositif auquel ces messages sont transmis en stoppant l'émission de messages de scrutation, ledit autre dispositif, auquel les messages de scrutation sont envoyés, étant prévu pour se mettre en veille à partir du moment où il n'a pas reçu de messages de scrutation pendant une durée prédéterminée.

L'invention propose aussi un circuit d'interface pour dispositif d'un système dans lequel deux tels dispositifs comportent chacun des moyens d'interface incluant ou moins un microprocesseur et un circuit d'interface permettant aux dispositifs de s'interconnecter au travers d'une liaison d'échange de données dont le support physique permet la présence d'un signal électrique.

Selon une caractéristique de l'invention, que chaque circuit d'interface comporte des moyens d'entrée/sortie et des moyens de génération et de détection de changement d'état de signal électrique qui sont reliés au support physique, les moyens de génération et de détection étant agencés pour pouvoir, d'une part, générer un changement du signal électrique appliqué au support physique pendant une durée prédéterminée en réponse à un signal de commande de réveil provenant du microprocesseur du dispositif auquel le circuit d'interface est affecté, ainsi que pour pouvoir, d'autre part, détecter un changement d'état du signal électrique appliqué au support physique et agir en conséquence sur le contrôleur d'activité du dispositif auquel le circuit d'interface est affecté, pour que soient commandés l'activation d'un signal d'horloge cadençant ce circuit d'interface et le microprocesseur du dispositif auquel ce circuit est affecté, ainsi que l'envoi d'un signal d'interruption à ce microprocesseur.

L'invention propose également un radiotéléphone comportant des moyens d'émission et de réception radioélectriques, ainsi qu'un microprocesseur, une mémoire et un contrôleur d'activité et auquel est associé un circuit d'interface se connectant à une liaison d'échange de données dont le support physique permet la présence d'un signal électrique.

Selon une caractéristique de l'invention, le circuit d'interface comporte des moyens d'entrée/sortie et des moyens de génération et de détection de changement d'état de signal électrique qui sont reliés au support physique. Les moyens de génération et détection sont agencés pour pouvoir, d'une part, générer un changement du signal électrique appliqué au support physique pendant une durée prédéterminée en réponse à un signal de commande de réveil provenant du microprocesseur du dispositif auquel le circuit d'interface est affecté, ainsi que pour pouvoir, d'autre part, détecter un changement d'état du signal électrique appliqué au support physique et agir en conséquence sur le contrôleur d'activité du dispositif auquel le circuit d'interface est affecté, pour que soient commandés l'activation d'un signal d'horloge cadençant ce circuit d'interface et le microprocesseur du dispositif auquel ce circuit est affecté, ainsi que l'envoi d'un signal d'interruption à ce microprocesseur.

D'autres caractéristiques et avantages de la présente invention apparaîtront plus clairement à la lecture de la description suivante en référence aux dessins annexés correspondants dans lesquels :
- la figure 1, déjà commentée, montre sous forme de bloc diagramme, un système communicant incluant un radiotéléphone portatif et un micro-ordinateur interconnectés à travers une liaison d'échange de données
- la figure 2, également déjà commentée, montre sous forme de bloc diagramme plus détaillé, deux circuits de contrôle et circuits d'interface associés inclus dans les radiotéléphone et micro-ordinateur de la figure 1; et
- la figure 3 montre un bloc diagramme d'un circuit d'interface selon l'invention pour la mise en oeuvre du procédé d'économie d'énergie selon l'invention.

L'Interconnexion des Systèmes Ouverts obéit à la Recommandation OSI de l'ISO, qui définit un modèle en couches, faisant intervenir logiciel et matériel et ayant chacune une fonction particulière dans une interconnexion entre deux systèmes. Sont distinguées les couches PHYSIQUE, LIAISON, RESEAU, SESSION, PRESENTATION et APPLICATION. A titre d'exemple, la couche SESSION définit les modalités d'établissement d'une connexion, la couche liaison garantit l'intégrité des données transmises, et la couche PHYSIQUE concerne des fonctions telles que la synchronisation des échanges de données, et les modalités de transmission électrique. Chaque couche utilise les services des couches inférieures pour communiquer avec la couche correspondante dans le dispositif distant.

L'application d'un principe d'économie d'énergie relativement aux circuits d'interface 13d et 25 et microprocesseurs 120 et 240 dans deux dispositifs interconnectées à travers une liaison d'échange de données, au sens de l'OSI, n'est pas prévue par les réalisations de la technique antérieure, et nécessite de redéfinir, au moins partiellement, la mise en oeuvre des protocoles d'interconnexion de deux dispositifs. Ainsi, la mise en veille des couches PHYSIQUE d'une telle liaison, largement incluses dans les circuits d'interface 13d et 25, et des couches supérieures implémentées grâce aux microprocesseurs 120, 240 et mémoires associées 121, 241, ne peut être obtenue selon la technique antérieure. Ces mises en veille consistent en pratique à désactiver les horloges activant ces circuits d'interface et microprocesseurs. Supposons qu'après une période de veille, des données doivent être transmises par le micro-ordinateur 2 vers le réseau mobile à travers la radiotéléphone portatif 1. Dans le micro-ordinateur 2, par exemple en réponse à une manipulation par l'usager, le microprocesseur 240 et l'interface 25 sont réactivés, mais rien ne permet selon la technique antérieure à ce micro-ordinateur 2 de réveiller, ou activer, à distance les circuit d'interface 13d, et microprocesseur 120 dans le radiotéléphone 1, ne recevant plus de signal d'horloge. En effet, la liaison de données prise seule permet uniquement un échange de données de nature logique, ou message, (trame, paquet,...) entre le micro-ordinateur 2 et le radiotéléphone 1. Or une information logique ne permet pas une activation à distance des circuit d'interface 13d et microprocesseur 120 dans le radiotéléphone 1. Des lors que les circuit d'interface 13d et microprocesseur 120 sont en veille, un réveil à distance de ces circuits 13d et 120 par voie de message n'est pas possible, et cela précisement parce que ces circuits 120 et 13d dans le radiotéléphone 1 sont en veille.

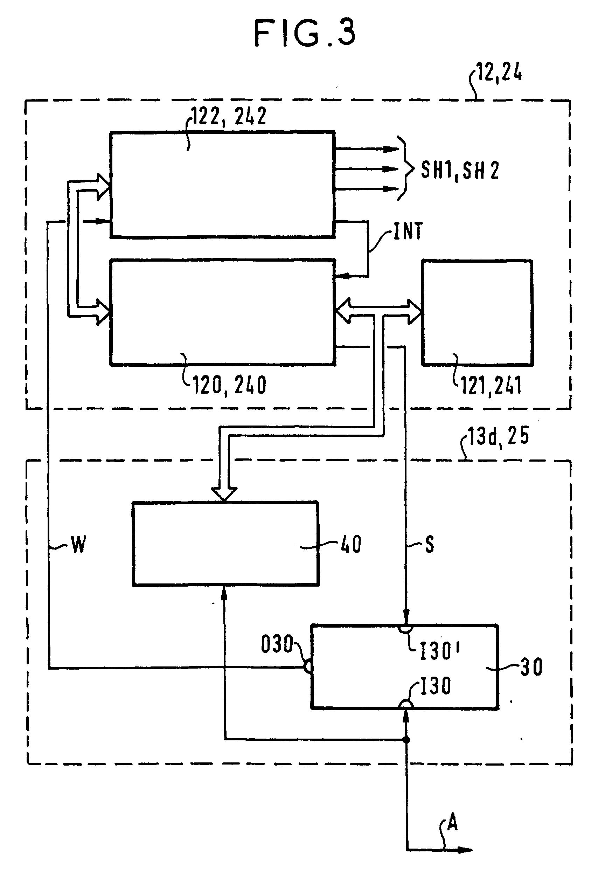

En référence aux figures 2 et 3, sont maintenant décrits deux modes particuliers de réalisation de l'invention. Dans ces deux modes de réalisation, il est prévu un fonctionnement de type maître-esclave entre le radiotéléphone 1 et le micro-ordinateur 2, le radiotéléphone 1 jouant le rôle de dispositif maître et le micro-ordinateur 2 celui d'esclave. Seul le radiotéléphone 1 prend la décision de mettre en veille l'interface entre lui-même et le micro-ordinateur 2. Doit être associé, au terme d'interface, l'ensemble des circuits nécessaires à l'interconnexion des radiotéléphone 1 et micro-ordinateur 2, à savoir notamment les microprocesseur 120 et circuit d'interface 13d dans le radiotéléphone 1, et les microprocesseur 240 et circuit d'interface 25 dans le micro-ordinateur 2.

Le radiotéléphone 1 transmet périodiquement, à travers le circuit d'interface 13d et le support physique A des messages de scrutation à destination du micro-ordinateur 2 invitant ce dernier à renvoyer en retour, si nécessaire, un message de demande d'émission de données.

Selon le premier mode de réalisation, si après N messages de scrutation émis, avec N par exemple égal à 3, aucun message de demande de transmission de données n'est renvoyé par le micro-ordinateur 2, le radiotéléphone 1 prend la décision de mettre en veille le micro-ordinateur 2. Il le fait en transmettant sur la liaison de données établie avec le micro-ordinateur 2, un message de mise en veille à destination dudit micro-ordinateur 2. Ce message de mise en veille est reçu par le microprocesseur 240 dans le micro-ordinateur 2, qui, en réponse, commande à travers le bus Bca' le contrôleur d'activité 242 de sorte que ce dernier désactive les circuits d'horloge cadençant les microprocesseur 240 et circuit d'interface 25.

Selon le second mode de réalisation, si après N messages de scrutation émis, avec N entier et par exemple égal à 3, aucun message de demande de transmission de données n'est transmis par le micro-ordinateur 2, le radiotéléphone 1 prend la décision de mettre en veille le micro-ordinateur 2. Il le fait en ne transmettant plus de message de scrutation sur la liaison de données établie avec le micro-ordinateur 2. Le microprocesseur 240 dans le micro-ordinateur 2 ne recevant pas de message de scrutation pendant une durée prédéterminée commande à travers le bus Bca' le contrôleur d'activité 242 de sorte que ce dernier désactive les circuits d'horloge cadençant les microprocesseur 240 et circuit d'interface 25.

Les deux modes de réalisation donnés ci-dessus prévoient une mise en veille du micro-ordinateur 2 par le radiotéléphone par voie de message, ou bien par transmission d'un message de mise en veille, ou bien par défaut de transmission de message de scrutation. Dans ces deux modes de réalisation, en supposant qu'aucun autre dispositif périphérique, tels que télécopieur également connecté au radiotéléphone 1, n'existe, ou ne transmet un message de demande d'émission de données en réponse à un message de scrutation, alors le radiotéléphone 1 met lui-même en veille ses circuits d'interface, à savoir le microprocesseur 120 et le circuit 13d à travers le contrôleur d'activité 122. En réponse aux étapes qui précèdent, les circuits 120, 240, 13d et 25 sont mis en veille et l'économie d'énergie est maximale. Cette mise en veille ne correspond néanmoins pas à la mise hors tension ni du micro-ordinateur 2 ni du radiotéléphone 1 qui restent tous deux aptes à réactiver, ou réveiller, immédiatement la liaison de données momentanément "mise en veille" par désactivation des horloges alimentant les circuits 120, 240, 13d et 25. Les deux cas typiques d'une telle réactivation sont directement liés à la réception par le radiotéléphone 1 de données destinées au micro-ordinateur 2, ou l'émission par le micro-ordinateur 2 de données à destination du radiotéléphone 1. L'activation de l'un parmi les radiotéléphone 1 et micro-ordinateur 2 par l'autre de ces deux dispositifs est opérée de la manière suivante. Initialement le microprocesseur dans l'un des deux dispositifs 1 ou 2, qui est à titre d'exemple le radiotéléphone 1 dans la suite de la description, est activé en réponse à un événement extérieur, tel que pression sur une touche par l'usager, ou par le signal produit par le circuit d'horloge réactivé par le contrôleur d'activité. Par exemple dans ce dernier cas, le microprocesseur 120 active, à travers le contrôleur d'activité 122, les circuits nécessaires à la réception d'un signal d'appel. En supposant qu'un appel est relatif à une communication de transfert de données vers le micro-ordinateur 2, alors le microprocesseur 120 commande l'activation du circuit d'interface 13d. Puis le radiotéléphone réveille les microprocessseur 240 et circuit d'interface 25 dans le micro-ordinateur 2. Selon une caractéristique importante de l'invention, et sachant que les circuits 25 et 240 dans le micro-ordinateur 2 sont en veille, l'activation, ou réveil, de ces circuits par le radiotéléphone 1 est opérée de façon électrique, par exemple par changement d'état pour une durée supérieure à une durée prédéterminée, d'un signal présent dans le support physique A de la liaison et appliqué à l'entrée du circuit d'interface 25 dans le micro-ordinateur 2. Cette caractéristique va à l'encontre des réalisations de la technique antérieure selon lesquelles la liaison de données est destiné à véhiculer uniquement des informations électriques de type logique (messages), et pour lesquelles les circuits d'interface 13d et 25 sont transparents à la nature de ces informations .

Comme montré dans la figure 3, un circuit d'interface 13d, 25, de type identique dans les radiotéléphone 1 et micro-ordinateur 2, pour la mise en oeuvre de l'invention, comprend une unité d'entrée/sortie 40 et un circuit 30 de détection et génération de changement d'état d'un signal dans le support physique A. Une première entrée I30 du circuit 30 reçoit une extrémité du support physique A de la liaison, une seconde entrée I30' reçoit un signal de génération de changement d'état W produit par le microprocesseur 120, 240, et une sortie 030 de ce circuit 30 est appliquée à une entrée du contrôleur d'activité 122, 242 et produit un signal de commande de réveil S. L'unité 40 est reliée, à travers le bus B1, B2 au microprocesseur 120, 240. Lorsque les moyens d'interface 120, 13d ou 240, 25 dans l'un des dispositifs 1 ou 2 doivent réveiller les moyens d'interface dans l'autre de ces dispositifs 1 ou 2, alors le microprocesseur 120, 240 produit le signal de génération de changement d'état W qui est appliqué à l'entrée du circuit 30. Ce circuit 30, en réponse, change l'état du signal présent dans le support physique A pendant une durée prédéterminée. Pour les moyens d'interface 120, 13d ou 240, 25 dans l'autre des dispositifs 1 ou 2 qui est en veille, le fonctionnement est tel que suit. En réponse à la détection par le circuit 30 dans cet autre dispositif, micro-ordinateur 2 ou radiotéléphone 1, d'un changement d'état du signal dans le support A pour une durée supérieure à la durée prédéterminée, ce circuit 30 produit le signal de commande de réveil S à destination du contrôleur d'activité 122, 242. Le contrôleur d'activité 122, 242, sur réception de ce signal de commande de réveil S, d'une part active le circuit d'horloge cadençant le microprocesseur 120, 240, et d'autre part produit un signal d'interruption à destination du microprocesseur 120, 240. Il est à noter que la mise en veille des circuits d'interface 13d, 25 ne concerne que l'unité 40 et non le circuit 30 qui reste activé pour détecter un tel changement d'état du signal dans le support A. Le signal d'interruption INT permet au microprocesseur de se "brancher" sur un programme de gestion de l'interface avec le radiotéléphone 1 ou le micro-ordinateur 2 permettant une communication avec ce dernier.

Comme mentionné précédemment, le micro-ordinateur 2 peut être à l'origine de l'activation de l'interface, et le circuit d'interface 13d dans le radiotéléphone est de structure identique à celui 25 dans le micro-ordinateur (Figure 3).

Avantageusement, un seul et même support physique A est destiné à véhiculer non simultanément, d'une part, des messages de données transmis par la liaison d'échange de données et, d'autre part, le signal d'activation à changement d'état qui permet l'activation de l'un des micro-ordinateur et radiotéléphone par l'autre de ces dispositifs. Cela signifie qu'un même et unique lien filaire, exception faite de la masse, véhicule ces deux types d'informations.

Par ailleurs, il apparaîtra évident à l'homme du métier qu'il est nécessaire que soient gérées dans les micro-ordinateur 2 et radiotéléphone 1 ces activation ou mise en veille en fonction des états courants des circuits 120, 13d et 240, 25 dans les radiotéléphone et micro-ordinateur. Par exemple, selon l'exemple précité, une couche située au-dessus de la couche PHYSIQUE devra connaître l'état "en veille" par exemple du radiotéléphone 1, et générer en conséquence une primitive pour que la couche PHYSIQUE dans le radiotéléphone 1 produise le changement d'état du signal présent dans le support physique, et active en conséquence le micro-ordinateur distant.

Il conviendra en outre d'étendre l'objet de la présente invention à tout système incluant deux dispositifs s'interconnectant à travers une liaison d'échange de données.

## Revendications

1. Procédé d'économie d'énergie dans un système incluant un premier et un second dispositifs (1, 2) s'interconnectant à travers une liaison d'échange de données qui dispose d'un support physique (A) et qui est établie entre des premiers et des seconds moyens d'interface (120, 13d; 240, 25) respectivement contenus les uns dans le premier dispositif et les autres dans le second et cadencés respectivement par un premier et un second circuit d'horloge (SH1, SH2), **caractérisé par** les étapes de :
- mise en veille, par voie de message à travers la liaison d'échange établie, des moyens d'interface d'un premier des dispositifs par les moyens d'interface du second des dispositifs, ladite mise en veille étant réalisée par une désactivation du circuit d'horloge des moyens d'interface mis en veille ;
- réveil des moyens d'interface du premier des dispositifs par les moyens d'interface du second dispositif, par voie électrique à travers le support physique (A) de la liaison d'échange de données, ledit réveil étant obtenu par un changement d'état dans ledit support physique respectivement généré et détecté par des circuits (30) compris dans les moyens d'interface du second et du premier dispositif.

2. Procédé conforme à la revendication 1, dans lequel la mise en veille d'un dispositif est occasionnée par la transmission d'un message de mise en veille par les moyens d'interface d'un dispositif aux moyens d'interface de l'autre dispositif, à travers le support physique (A) de la liaison d'échange.

3. Procédé conforme à la revendication 1, dans lequel l'un des dispositifs émet successivement des messages dits de scrutation, par ses moyens d'interface sur la liaison d'échange de données, vers les moyens d'interface de l'autre dispositif, pour inviter cet autre à lui renvoyer en retour, un message, dit de demande d'émission de données et dans lequel le dispositif qui émet les messages de scrutation déclenche la mise en veille du dispositif auquel ces messages sont transmis en stoppant l'émission de messages de scrutation, ledit autre dispositif, auquel les messages de scrutation sont envoyés, étant prévu pour se mettre en veille à partir du moment où il n'a pas reçu de messages de scrutation pendant une durée prédéterminée.

4. Circuit d'interface pour dispositif (1 ou 2) d'un système dans lequel deux tels dispositifs comportent chacun des moyens d'interface incluant au moins un microprocesseur (120 ou 240) et d'un circuit d'interface (13d ou 25) permettant aux dispositifs de s'interconnecter au travers d'une liaison d'échange de données dont le support physique (A) permet la présence d'un signal électrique, **caractérisé en ce que** chaque circuit d'interface comporte des moyens d'entrée/sortie (40) et des moyens (30) de génération et de détection de changement d'état de signal électrique qui sont reliés au support physique, les moyens de génération et de détection étant agencés pour pouvoir, d'une part, générer un changement du signal électrique appliqué au support physique pendant une durée prédéterminée en réponse à un signal de commande de réveil (S) provenant du microprocesseur du dispositif auquel le circuit d'interface est affecté, ainsi que pour pouvoir, d'autre part, détecter un changement d'état du signal électrique appliqué au support physique et agir en conséquence sur le contrôleur d'activité du dispositif auquel le circuit d'interface est affecté, pour que soient commandés l'activation d'un signal d'horloge cadençant ce circuit d'interface et le microprocesseur du dispositif auquel ce circuit est affecté, ainsi que l'envoi d'un signal d'interruption (INT) à ce microprocesseur.

5. Radiotéléphone comportant des moyens d'émission et de réception radioélectriques (11), un microprocesseur (120), une mémoire (121) et un contrôleur d'activité (122) et auquel est associé un circuit d'interface (13d) se connectant à une liaison d'échange de données dont le support physique (A) permet la présence d'un signal électrique, **caractérisé en ce que** le circuit d'interface comporte des moyens d'entrée/sortie (40) et des moyens (30) de génération et de détection de changement d'état de signal électrique qui sont reliés au support physique, les moyens de génération et détection étant agencés pour pouvoir, d'une part, générer un changement du signal électrique appliqué au support physique pendant une durée prédéterminée en réponse à un signal de commande de réveil (S) provenant du microprocesseur du dispositif auquel le circuit d'interface est affecté, ainsi que pour pouvoir, d'autre part, détecter un changement d'état du signal électrique appliqué au support physique et agir en conséquence sur le contrôleur d'activité du dispositif auquel le circuit d'interface est affecté, pour que soient commandés l'activation d'un signal d'horloge cadençant ce circuit d'interface et le microprocesseur du dispositif auquel ce circuit est affecté, ainsi que l'envoi d'un signal d'interruption (INT) à ce microprocesseur.

## Claims

1. An energy conservation method for use in a system including first and second devices (1, 2) interconnected by a data communication link which has a physical medium (A) and is made between first and second interface means (120, 13d; 240, 25) contained respectively in the first and second devices and timed respectively by first and second clock circuits (SH1, SH2), **characterized by** the following steps:
- sending a message over the communication link set up to put the interface means in a first device on standby, the message being sent by the interface means in the second device, said interface means being put on standby by deactivation of the clock circuit thereof and
- reactivation of the interface means of the first device by the interface means of the second device by electrical means via the physical medium (A) constituting the link, said reactivation being achieved by changing the state on said physical medium respectively generated and detected by the circuits (30) of the interface means of the second and first devices.

2. A method according to claim 1, wherein a device is put on standby by the interface means of one device sending a standby message to the interface means of the other device via the physical medium (A) of the exchange link.

3. A method according to claim 1, wherein one of the devices sends successive messages, referred to as scanning messages, via its interface means and over the data exchange link to the interface means of the other device to invite said other device to send back to it a message, referred to as a data send request, in which the device which sends the scanning messages triggers the putting on standby of the device to which the messages are sent by stopping the sending of the scanning messages, said other device, to which the scanning messages are sent, being adapted to be put on standby when it has not received scanning messages for a predetermined period.

4. An interface circuit for a device (1 or 2) of a system in which two such devices each include interface means including at least one microprocessor (120 or 240) and an interface circuit (13d or 25) enabling the devices to connect to each other via a data exchange link whose physical medium (A) allows the presence of an electrical signal, **characterized in that** each interface circuit includes input/output means (40) and means (30) for generating and detecting a change of state of the electrical signal which are connected to the physical medium, the generator and detector means being adapted to be able, on the one hand, to generate a change in the electrical signal applied to the physical medium for a predetermined time in response to an activation command signal (S) coming from the microprocessor of the device to which the interface circuit is assigned, and to be able, on the other hand, to detect a change in the state of the electrical signal applied to the physical medium and to act accordingly on the activity controller of the device to which the interface circuit is assigned, in order to command activation of a clock signal timing said interface circuit and the microprocessor of the device to which said circuit is assigned, as well as sending an interrupt signal (INT) to said microprocessor.

5. A mobile telephone including radio sending and receiving means (11), a microprocessor (120), a memory (121) and an activity controller (122) and with which is associated an interface circuit (13d) connected to a data exchange link whose physical medium (A) allows the presence of an electrical signal, **characterized in that** the interface circuit includes input/output means (40) and means (30) for generating and detecting a change of state of the electrical signal which are connected to the physical medium, the generator and detector means being adapted to be able, on the one hand, to generate a change in the electrical signal applied to the physical medium for a predetermined time in response to an activation command signal (S) coming from the microprocessor of the device to which the interface circuit is assigned, and to be able, on the other hand, to detect a change in the state of the electrical signal applied to the physical medium and to act accordingly on the activity controller of the device to which the interface circuit is assigned, in order to command activation of a clock signal timing said interface circuit and the microprocessor of the device to which said circuit is assigned, as well as sending an interrupt signal (INT) to said microprocessor.

## Patentansprüche

1. Verfahren zur Einsparung von Energie in einem System, das eine erste und eine zweite Vorrichtung (1, 2) beinhaltet, die miteinander über eine Datenaustauschverbindung verbunden sind, welche über einen physischen Träger (A) verfügt und welche zwischen einer ersten und einer zweiten Schnittstelleneinrichtung (120, 13d; 240, 25) besteht, von denen die eine in der ersten Vorrichtung und die andere in der zweiten Vorrichtung enthalten ist und die durch eine erste bzw. eine zweite Taktgeberschaltung (SH1, SH2) getaktet sind, **gekennzeichnet durch** die folgenden Schritte:
- die Schnittstelleneinrichtung einer ersten der Vorrichtungen wird mittels einer Nachricht über die bestehende Datenaustauschverbindung in den Schlafzustand versetzt, wobei das Versetzen in den Schlafzustand **durch** eine Deaktivierung der Taktgeberschaltung der in den Schlafzustand versetzten Schnittstelleneinrichtung erfolgt;
- die Schnittstelleneinrichtung der ersten Vorrichtung wird über die Schnittstelleneinrichtung der zweiten Vorrichtung auf elektrischem Weg über den physischen Träger (A) der Datenaustauschverbindung reaktiviert, wobei das Reaktivieren **durch** eine Zustandsänderung im physischen Träger erzielt wird, der **durch** die in den Schnittstelleneinrichtungen der zweiten und der ersten Einrichtung enthaltenen Schaltungen (30) erzeugt und erfasst wird.

2. Verfahren nach Anspruch 1, bei welchem das Versetzen in den Schlafzustand einer Vorrichtung durch die Übertragung einer Schlafzustandsaktivierungs-Nachricht mittels der Schnittstelleneinrichtung der einen Vorrichtung an die Schnittstelleneinrichtung der anderen Vorrichtung über den physischen Träger (A) der Datenaustauschverbindung erfolgt.

3. Verfahren nach Anspruch 1, bei dem die eine der Vorrichtungen sukzessive sogenannte Abfragenachrichten mittels ihrer Schnittstelleneinrichtung über die Datenaustauschverbindung zur Schnittstelleneinrichtung der anderen Vorrichtung schickt, um sie dazu zu veranlassen, ihr im Gegenzug eine als Datenaussendeanforderung bezeichnete Nachricht zurückzuschicken, und bei dem die Vorrichtung, welche die Abfragenachrichten aussendet, das Versetzen in den Schlafzustand der Vorrichtung auslöst, an die diese Nachrichten übertragen werden, indem sie mit dem Aussenden dieser Abfragenachrichten aufhört, wobei vorgesehen ist, das diese andere Vorrichtung, an die diese Abfragenachrichten geschickt werden, in den Schlafzustand von dem Moment an eintritt, bei dem sie während einer vorbestimmten Zeitdauer keine Abfragenachrichten erhalten hat.

4. Schnittstellenschaltung für eine Vorrichtung (1 oder 2) eines Systems, in welchem zwei derartige Vorrichtungen jeweils Schnittstelleneinrichtungen beinhalten, die mindestens einen Mikroprozessor (120 oder 240) und eine Schnittstellenschaltung (13d oder 25) enthalten, welche ein Verbinden der Vorrichtungen über eine Datenaustauschverbindung ermöglichen, deren physischer Träger (A) das Vorhandensein eines elektrischen Signals erlaubt, **dadurch gekennzeichnet, dass** jede Schnittstellenschaltung eine Eingabe/Ausgabeeinrichtung (40) und eine Einrichtung (30) beinhaltet, die dazu dienen, den Änderungszustand des elektrischen Signals zu erzeugen und zu erfassen, und die mit dem physischen Träger verbunden sind, wobei die zur Erzeugung und Erfassung dienenden Einrichtungen angeordnet sind, damit sie zum einen eine Änderung des elektrischen Signals bewirken können, das dem physischen Träger während eines vorbestimmten Zeitraums reagierend auf ein Reaktivierungssteuersignal (S) zugeführt wurde, welches vom Mikroprozessor der der Schnittstellenschaltung zugeordneten Vorrichtung herkommt, sowie auch um zum anderen eine Änderung des Zustands des an den physischen Träger angelegten elektrischen Signals erfassen zu können und demzufolge auf die Aktivitätssteuereinrichtung der der Schnittstelleneinrichtung zugeordneten Vorrichtung einzuwirken, um so die Aktivierung eines Taktsignals, das diese Schnittstellenschaltung und den Mikroprozessor der dieser Schaltung zugeordneten Vorrichtung taktet, und auch das Aussenden eines Interruptsignals (INT) an diesen Mikroprozessor zu steuern.

5. Funktelefon, das eine Einrichtung (11) zum drahtlosen Senden und Empfangen, einen Mikroprozessor (120), einen Speicher (121) und eine Aktivitätssteuereinrichtung (122) aufweist und über eine Schnittstellenschaltung (13d) verfügt, mit einer Datenaustauschverbindung in Verbindung steht, deren physischer Träger (A) das Vorhandensein eines elektrischen Signals erlaubt, **dadurch gekennzeichnet, dass** die Schnittstellenschaltung eine Eingabe-/Ausgabeeinrichtung (40) und eine Einrichtung (30) beinhaltet, die dazu dienen, den Änderungszustand des elektrischen Signals zu erzeugen und zu erfassen, und die mit dem physischen Träger verbunden sind, wobei die zur Erzeugung und Erfassung dienenden Einrichtungen angeordnet sind, damit sie zum einen eine Änderung des elektrischen Signals bewirken können, das dem physischen Träger während eines vorbestimmten Zeitraums reagierend auf ein Reaktivierungssteuersigrial (S) zugeführt wurde, welches vom Mikroprozessor der der Schnittstellenschaltung zugeordneten Vorrichtung herkommt, sowie auch um zum anderen eine Änderung des Zustands des an den physischen Träger angelegten elektrischen Signals erfassen zu können und demzufolge auf die Aktivitätssteuereinrichtung der der Schnittstelleneinrichtung zugeordneten Vorrichtung einzuwirken, um so die Aktivierung eines Taktsignals, das diese Schnittstellenschaltung und den Mikroprozessor der dieser Schaltung zugeordneten Vorrichtung taktet, und auch das Aussenden eines Interruptsignals (INT) an diesen Mikroprozessor zu steuern.
